# EUROPEAN PATENT SPECIFICATION

(11) **EP 0 546 783 B1**
(45) Date of publication and mention of the grant of the patent: **11.10.1995**
(21) Application number: 92311133.0
(22) Date of filing: 07.12.1992
(51) Int. Cl.: C03C 21/00, C03C 23/00

(54) **Lead crystal glassware and a process for its manufacture**
Bleikristallglasgegenstände und Verfahren zu deren Herstellung
Objets en verre de cristal de plomb et un procédé pour les produire

(30) Priority: 11.12.1991 GB 9126270
(43) Date of publication of application: 16.06.1993
(73) Proprietor: THE BRITISH GLASS MANUFACTURERS CONFEDERATION, Sheffield S10 2UA (GB)
(72) Inventor: Dalton, David Alan, c/o The British Glass, Sheffield S10 2UA (GB); Platts, Louise, c/o The British Glass, Sheffield S10 2UA (GB)
(74) Representative: Long, Edward Anthony

(56) References cited:
- EP-A- 0 458 713
- DE-A- 4 106 457
- US-A- 4 872 896
- DATABASE WPIL Section Ch, Week 8303, 1983 Derwent Publications Ltd., London,GB; Class L, AN 83-05704K & JP-A-57 196 743 (AGENCY OF IND. SCI. TECH) 2 December 1982)
- CHEMICAL ABSTRACTS, vol. 107, no. 24, December 1987, Columbus, Ohio, US;abstract no. 221988h, page 278 ; & JP-A-62 207 728 (MATSUSHITA ELECTRIC INDUSTRIAL CO.) 12 September 1987

## Description

The present invention relates to the field of manufacture of lead crystal glassware in general and containers in particular, for consumable foodstuff products and/or alcoholic beverages etc to be used for packaging for household/domestic use, and to a process for the manufacture of such products.

The basic object of the invention is to reduce or prevent the leaching of lead from the glass into the contents. The process has a particular but not exclusive application to the internal surfaces of lead crystal glass containers to prevent the leaching of lead into the contents, as it is known that lead migrates into the contents of, for example, lead crystal decanters when they are stored over long periods of time.

The determination of the rate or level of leaching of lead is carried out by filling containers with 4% acetic acid solution, then by measuring, using atomic absorption spectroscopy, the lead passed into the acid solution after a contact period of 24 hours at a temperature of 22°C. The level of lead authorised varies depending on the legislation of different countries, between 3mg/litre and 5mg/litre. This level will be reduced in some countries to 1mg/litre according to legislation now proposed. In a full lead crystal, that is containing more than 30% PbO, the measured levels of leaching according to this test are of the order of 0.2mg/litre.

In the case where such a container is intended to serve as packaging or enclosure it is the standards relating to the contents which must be satisfied. Thus in the case of spirits the maximum permitted levels vary between 0 and 0.5 mg/litre whatever the duration of contact.

Methods of treating the internal surfaces of lead crystal glassware to reduce lead leaching have been developed but generally have the disadvantages that their effect is not sufficient, that they are not permanent, and that the costs and inconvenience of applying treatments are excessive.

Consequently, there is a long felt need for an economical yet effective method of treatment which will reduce or eliminate the leaching of lead by providing a barrier between the lead-containing glass and liquids which will come into contact with it, whilst at the same time the physical and optical properties of the treated container must be compatible with the base glass to ensure permanence and to avoid detracting from the artistic and aesthetic nature of the product. Furthermore, the treated surface must be capable of withstanding normal usage and the treatment method must permit the treatment to be applied within the factory production process used to manufacture lead crystal glass and the material used in the treatment must be non-toxic.

Prior art proposed treatments fail in one or more of these requirements. Methods which have been used consist of carrying out a washing of the interior of the container prior to final filling. Washing by means of acetic acid, citric acid or nitric acid have been used, these washings being followed by a rinsing with water. These methods reduce lead leaching in the short term but fail in the longer terms. The leached surface from which lead has been removed comprises open diffusion channels through which lead in the base glass can migrate.

The traditional method known in the glass industry as "casing", that is the forming of the product from two distinct glasses, an outer one containing lead and an inner, lead-free glass (FR-A- 1759/89) does not prevent lead migration through the inner layer. It is also impossible to define a lead-free glass which matches the optical and physical properties of the outer glass.

Ion-exchange methods have been used in which the lead atoms in the glass surface are replaced by other non-toxic ions. (European Patent Application 91440036.)

In these processes the inside of the glass container is coated with a paste, slip or slurry containing the ions to be introduced into the glass surface. In a subsequent heat treatment certain cations in the glass, notably lead, diffuse into the paste and are replaced by cations, such as aluminium, which are present in the paste.

The cations concerned in these diffusion and exchange process are those which are least strongly attached to the siliceous structure, ie principally the structural modifying cations, in particular alkali and alkaline earth cations, and intermediate ions, in particular lead. The principal difficulty with these methods is that the diffusion process in the glasses are slow. The temperature at which the process can be carried out is limited to a range below the softening point of the base glass. Accordingly heat treatment times up to 17 hours are required. This renders the process long and expensive. Significant reductions in lead leaching are however achieved.

It is an object of the present invention to overcome these disadvantages by means of a new optimised process which makes possible the manufacture of a container, typically a decanter, with an internal surface of a lead free glass lying between the crystal glass and the contents of the container such layer serving to block and seal the migration channels for lead cations from the body of the glass.

According to a first aspect of the present invention, there is provided a method of treating a surface layer of a lead crystal glassware comprising:-
(1) etching the internal surface of the glassware, at elevated temperature of at least 30°C and preferably in the region of 90°C, to remove at least lead cations from the surface, to a predetermined depth;
(2) treating the etched surface by applying a coating of a paste, slip, slurry or solution containing non-toxic cations such as one or more of Ti, Al, Zn, Sr, Sn, Ca and Zr to fill the interstices of the lattice structure vacated by the lead etc. cations; and
(3) effecting thermal excitation of the coated surface to effect the cation exchange and to "cure" the surface.

The invention also includes lead crystal glassware treated or produced by the above defined method.

The use of the invention allows the manufacturer to make, and the consumer to use, glassware with all artistic and aesthetic quantities of lead crystal but which can be guaranteed to meet the most stringent regulations concerning lead migration from the crystal glass to the contents of the glassware.

Thus, the invention provides a process whereby conventionally produced lead crystal glassware may be given an anti-migration treatment requiring a total treatment time, typically 1 - 3 hours.

By elevated temperature is meant a temperature greater than room temperature, e.g. at least 30°C, while tests have shown that 90°C or thereabouts appears to be a satisfactory working temperature.

Preferably, thermal excitation is effected by microwave energy radiation, e.g. for 20 minutes or thereabouts, which radiation it is believed assists in achieving a relatively rapid rate of ion exchange from the coating into the glass surface.

Furthermore, by a combination of surface pretreatment in accordance with step (1) above, the accelerated ion exchange in accordance with step (2) above, and the subsequent curing step in accordance with step (3) above, lead cations are removed in a first stage from the surface layer, progressively to a prescribed depth, with the surface layer then being plugged by the diffusion of non-toxic ions contained in the coating, which is preferably water-based, and the curing of the resultant surface layer renders the surface more resistant to acid attack than would otherwise be the case.

In detail, preferred features of the method of the invention are as follows:-
- re step (1) above, the inside surface of the glassware container is treated (preleached) with 4% acetic acid at an elevated temperature of, typically, 90° Celsius. This treatment is completed in 1 to 3 hours and has the effect of removing lead from the surface layer of the glass and of hydrating that layer;
- re step (2) above, the container is filled with a solution, paste, slip or slurry of a compound or compounds containing the cations which will replace lead. The slip etc., coats the inside of the container and the excess is discarded;
- re step (3) above, the container and remaining slurry are subjected to microwave radiation at a power rating, typically, of 500 watts for 10 to 20 minutes, which it is believed compacts the glass around the introduced cations without distorting the container due to the localization of the heating;
- finally, the container is washed in water to remove excess residue from the slurry.

The slurry may contain one or more of di-, tri-, or quadrivalent cations. The cations are selected for their non-toxic nature, their ability to bond strongly to the siliceous stucture of the glass and their ability to modify the thermal, physical and optical properties of the surface layer of glass. Particularly effective cations are titanium, aluminium, zinc, strontium, tin, calcium and zirconium, which may be used individually or in combination. Of these titanium has been proved to be particularly effective in reducing lead leaching and of enhancing the properties of modified surface layers.

An individual and beneficial feature of the invention is simultaneously to ion exchange the potassium in the base glass by a more durable alkali ion such as lithium or sodium.

The process of the invention has the following effects on the treated glass surface:
- The acid wash removes lead and alkali ions preferentially from the surface; the elevated temperature accelerates this removal and permits the process to be performed in less than 3 hours.

The process of microwave radiation then proceeds in the following ways;
- first, microwave radiation is absorbed strongly by the water present in the slurry and by the leached and hydrated surface layer of the glass.
- microwave absorption causes preferential heating of the slurry and surface layer of glass; the bulk of the glass does not absorb microwaves and remains at a lower temperature thus permitting the transmission of microwaves to the treated layers.
- the hydrated surface layer is heated preferentially to a temperature at which ions will diffuse from the slurry into the glass surface to occupy the structural interstices previously occupied by lead and potassium.
- the high temperature of the surface layer of glass enhances microwave absorption, preferential heating and ion diffusion.
- the temperature of the surface layer increases to a level which permits microstructural flow to take place thus compacting and sealing the surface layers which now contain the introduced cations; the diffusion channels for further lead migration are thus both blocked and sealed.

The microwave radiation assists the process in the following ways;
- the water based slurry and the leached and hydrated surface layer of the glass are heated preferentially because the aqueous ions start the process by absorbing microwave radiation strongly and absorption is enhanced as the glass structure in the layer heats and the glass itself begins to absorb.
- the microwaves accelerate the diffusion of the introduced cations by;
   i) their direct heating effect
   ii) the preferential and rapid removal of water in the form of hydronium ions from the interface between the slurry and the glass thus permitting exchange with say titanium ions
   iii) the direct effect of the electric field produced by the microwaves on the positively changed ions.

Thus the diffusion processes are accelerated giving a process which is accomplished in 1 - 3 hours. Using only conventional heating, up to 17 hours are required to achieve a similar depth of penetration. The further benefit of which is achieved by microwave radiation is the preferential heating of the surface layers which permit the diffusion processes to take place at a temperature which is not limited by the softening point of the bulk glass. This has the dual effect of achieving more rapid diffusion of the ions and microflow of the surface.

The following test results exemplify the effect of the treatment method of the invention. The tests were carried out on full lead crystal decanters containing 32% PbO (but the process is also applicable to glasses with lower lead contents). Lead leaching was assessed using the standard test of exposure to 4% acetic acid solution at a temperature of 22°C, for 24 hours.
- with no treatment on a control decanter the amount of lead extracted in 24 hours was 0.5mg Pb/litre
- with a decanter pre leached only for 2 hours in 4% acetic acid at 90°C the lead extraction after 24 hours in the subsequent standard test could not be detected
- with three decanters from different sources preleached as above but after an exposure of 8 months in the standard text, the lead extraction was 1.7mg Pb/L, 4.8mg Pb/L and 28.5mg Pb/L
- with a series of decanters subjected to the invented process the following extractions were measured after 20 weeks of exposure to 4% acetic acid

| | |
|---|---|
| i) No treatment | 8.4mg Pb/L |
| ii) Treated with Sr | 0.105mg Pb/L |
| iii) Treated with Zn | 0.105mg Pb/L |
| iv) Treated with Ti | 0.022mg Pb/L |

## Claims

1. A method of treating a surface layer of a lead crystal glassware comprising:-
(1) etching the internal surface of the glassware, at elevated temperature of at least 30°C and preferably in the region of 90°C, to remove at least lead cations from the surface, to a predetermined depth;
(2) treating the etched surface by applying a coating of a paste, slip, slurry or solution containing non-toxic cations such as one or more of Ti, Al, Zn, Sr, Sn, Ca and Zr to fill the interstices of the lattice structure vacated by the lead etc. cations; and
(3) effecting thermal excitation of the coated surface to effect the cation exchange and to "cure" the surface.

2. A method as claimed in Claim 1, wherein the elevated temperature etching is carried out at approximately 90°C for up to two hours.

3. A method as claimed in Claim 1 or Claim 2, wherein the etching is effected by acetic acid, preferably 4% solution.

4. A method as claimed in any preceding Claim, wherein the coating is water based.

5. A method as claimed in any preceding Claim, in which thermal excitation is effected by microwave radiation at a power rating of typically 500 watts, for 10 - 20 minutes.

6. A method as claimed in Claim 5, in which the microwave radiation is used to heat preferentially the surface layer to increase microflow in the surface layer thus compacting the glass structure of the surface layer and sealing the diffusion channels to preclude further migration of lead from the base glass.

7. A method as claimed in any preceding Claim, in which ions, such as one or more of Ti, Al, Zn, Sr, Sn, Ca, Zr and Li or Na, are introduced into the surface layer to aid the diffusion and microflow processes without detracting from the optical, chemical and physical properties of the surface layer or the aesthetic and artistic value of the glassware.

8. Lead crystal glassware treated or manufactured by the method of any preceding Claim.

## Patentansprüche

1. Verfahren zur Behandlung einer Oberflächenschicht von Bleikristall-Glaswaren, folgendes umfassend:
(1) Ätzen der inneren Oberfläche der Glasware bis zu einer vorbestimmten Tiefe bei erhöhter Temperatur von mindestens 30°C und vorzugsweise im Bereich von 90°C, um zumindest Bleikationen aus der Oberfläche zu entfernen;
(2) Behandeln der geätzten Oberfläche durch Auftragen einer Beschichtung in Form einer Paste, als Schlicker, Gießmasse oder als Lösung, die nichttoxische Kationen enthält, beispielsweise eines oder mehrere Elemente aus der Gruppe Ti, Al, Zn, Sr, Sn, Ca und Zr, um die Zwischenräume der Gitterstruktur, in denen sich keine Bleikationen und andere Kationen mehr befinden, auszufüllen; und
(3) Bewirken einer thermischen Anregung der beschichteten Oberfläche, um den Kationenaustausch herbeizuführen und die Oberfläche zu "härten".

2. Verfahren nach Anspruch 1, bei dem das Ätzen bei erhöhter Temperatur bei etwa 90°C bis zu zwei Stunden ausgeführt wird.

3. Verfahren nach Anspruch 1 oder Anspruch 2, bei dem das Ätzen mit Essigsäure ausgeführt wird, vorzugsweise mit einer 4%-igen Lösung.

4. Verfahren nach jedem vorangehenden Anspruch, bei dem die Beschichtung eine Beschichtung auf Wasserbasis ist.

5. Verfahren nach jedem vorangehenden Anspruch, bei dem die thermische Anregung durch Mikrowellenstrahlung bei einer Nennleistung von typischerweise 500 Watt über einen Zeitraum von 10-20 Minuten erfolgt.

6. Verfahren nach Anspruch 5, bei dem die Mikrowellenstrahlung dazu dient, vorzugsweise die Oberflächenschicht zu erwärmen, um den Mikrofluß in der Oberflächenschicht zu verstärken, wodurch die Glasstruktur der Oberflächenschicht verdichtet und die Diffusionskanäle versiegelt werden, um eine weitere Migration von Blei aus dem Basisglas auszuschließen.

7. Verfahren nach jedem vorangehenden Anspruch, in dem Ionen, beispielsweise eines oder mehrere Elemente aus der Gruppe Ti, Al, Zn, Sr, Sn, Ca, Zr und Li oder Na, in die Oberflächenschicht eingebaut werden, um die Diffusions- und Mikroflußprozesse zu unterstützen, ohne daß die optischen, chemischen und physikalischen Eigenschaften der Oberflächenschicht oder der ästhetische und künstlerische Wert der Glasware gemindert werden.

8. Bleikristall-Glasware, die nach dem Verfahren nach jedem vorangehenden Anspruch behandelt oder hergestellt wird.

## Revendications

1. Procédé de traitement d'une couche de surface d'une verrerie en verre plombeux, caractérisé en ce qu'il comprend les étapes suivantes:
(1) graver à l'acide la surface interne de la verrerie, à une température élevée d'au moins 30°C et de préférence, proche de 90°C, pour retirer au moins les cations de plomb de la surface, jusqu'à une profondeur prédéterminée;
(2) traiter la surface gravée à l'acide en appliquant un revêtement d'une pâte, d'une bouillie, d'une barbotine ou d'une solution contenant des cations non toxiques tels qu'un ou plusieurs cation(s) choisis parmi ceux de Ti, Al, Zn, Sr, Sn, Ca et Zr pour remplir les interstices de la structure réticulaire libérés par les cations de plomb, etc..; et
(3) effectuer une excitation thermique de la surface recouverte pour assurer l'échange de cations et pour "durcir" la surface.

2. Procédé selon la revendication 1, caractérisé en ce que la gravure à l'acide à température élevée est effectuée à environ 90°C pendant une période pouvant aller jusqu'à deux heures.

3. Procédé selon la revendication 1 ou la revendication 2, caractérisé en ce que la gravure est réalisée avec de l'acide acétique, de préférence en solution à 4%.

4. Procédé selon l'une quelconque des revendications précédentes, caractérisé en ce que le revêtement est à base d'eau.

5. Procédé selon l'une quelconque des revendications précédentes, caractérisé en ce que l'excitation thermique est effectuée par rayonnement de microondes, avec une puissance de 500 watts , pendant 10 à 20 minutes.

6. Procédé selon la revendication 5, caractérisé en ce que le rayonnement de microondes est utilisé pour chauffer, de préférence, la couche de surface pour augmenter le microécoulement dans la couche de surface et compacter ainsi la structure de verre de la couche de surface et fermer avec étanchéité les canaux de diffusion pour éviter toute migration du plomb hors du verre de base.

7. Procédé selon l'une quelconque des revendications précédentes, caractérisé en ce que les ions, tels qu'un ou plusieurs ion(s) choisis parmi ceux de Ti, Al, Zn, Sr, Sn, Ca, Zr et Li ou Na sont introduits dans la couche de surface pour favoriser les processus de diffusion et de microécoulement sans nuire aux propriétés optiques, chimiques et physiques de la couche de surface ni à la valeur esthétique ou artistique de la verrerie.

8. Article de verre plombeux traité ou fabriqué selon le procédé de l'une quelconque des revendications précédentes.
